# EUROPEAN PATENT APPLICATION

(11) **EP 4 760 709 A1**
(43) Date of publication of application: **17.06.2026**
(21) Application number: 25218580.6
(22) Date of filing: 26.11.2025
(51) Int. Cl.: G10L 15/16, G10L 15/18, G10L 15/26

(54) **HYBRID TRANSCRIPTION ENHANCEMENT WITH CONTEXT AWARENESS**

(30) Priority: 10.12.2024 US 202418976205
(71) Applicant: Mitel Networks Corporation, Ottawa, Ontario K2K 3K1 (CA)
(72) Inventor: Brochonski, Michael, Curitiba (BR); Tsiatsikas, Zisis, Thessaloniki (GR)
(74) Representative: McDougall, James

(57) **Abstract**

The invention relates to a method and a system for generating accurate speech-to-text transcriptions in communication sessions. The invention uses a hybrid approach leveraging the strengths of both, machine learning models and traditional NLP techniques. Thus, the present invention allows for maintaining transcription quality and context awareness while keeping compute costs reasonable and enables easy updates to domain-specific vocabulary without solely relying on complex model capabilities.

## Description

### FIELD OF DISCLOSURE

The present invention relates to a method for generating accurate speech-to-text transcriptions in communication sessions, and a system for performing the method.

### BACKGROUND OF THE DISCLOSURE

Speech-to-text transcription, also known as automatic speech recognition (ASR), is a function that enables a program to process human speech in a written format. It involves the use of technology like Machine Learning (ML) or Artificial Intelligence (Al) to process human speech into readable text.

There are challenges and drawbacks that all state-of-the-art speech recognition approaches face. Handling a variety of accents, dialects and speech patterns is challenging, systems trained on a limited dataset may struggle with non-standard accents or languages. Also, industries like medicine or law often use jargon or specialized terms, also named domain-specific vocabulary, that generic speech-to-text engines may not recognize. In addition, achieving accurate real-time transcription, especially in live settings like courtrooms or meetings, can be resource-intensive and complex.

There are different approaches for speech recognition known in the state of the art. ML-based speech-to-text (STT) models, while offering high accuracy and context-aware corrections, often require substantial computational resources. Smaller ML models that can run on consumer-grade devices lack domain-specific vocabulary, while larger, more accurate ML models are cost-prohibitive to run at scale and in a real-time format. Additionally, updating the vocabulary and/or grammar of these models is often complex and requires expertise.

Traditional Natural Language Processing (NLP) techniques (e.g., WebSpeech API) can run on most devices with low computational cost. However, they lack context-aware correction capabilities and are limited to capturing audio from local device microphones. While they allow easy expansion of vocabulary, their accuracy is generally lower than ML-based models.

Cloud-based ASR services provide high accuracy and scalability. However, there are potential privacy concerns, the system is dependent on internet connectivity, and it can be costly at scale.

These limitations of the state of the art create a high entry barrier for implementing Generative Artificial Intelligence (GenAl) enabled solutions for speech-to-text transcriptions in Unified Communication (UC) sessions, Conference Center (CC) sessions, and E-Consultation environments. The inability to deliver accurate, real-time transcriptions at a reasonable cost and scale prevents organizations from leveraging the full potential of Al-driven improvements in these strategic areas. Furthermore, the difficulty in updating domain-specific vocabulary in some solutions restricts their adaptability to various industries and use cases.

Thus, there is a need in the art to overcome the drawbacks of the state of the art and provide an approach for speech recognition in real-time or near real-time to deliver highly accurate transcriptions at a reasonable cost and scale.

Any discussion, including discussion of problems and solutions, set forth in this section, has been included in this disclosure solely for the purpose of providing a context for the present disclosure, and should not be taken as an admission that any or all of the discussion was known at the time the invention was made or otherwise constitutes prior art.

### SUMMARY OF THE DISCLOSURE

Therefore, the present invention is based on the object to provide a method for generating accurate speech-to-text transcriptions in communication sessions and a corresponding system which is configured to perform the inventive method.

In particular, a method and a system for generating accurate STT transcriptions in communication sessions is provided, wherein the strengths of ML models and NLP techniques are combined to provide high-accuracy transcriptions with easily updatable domain-specific vocabulary while maintaining reasonable computational costs and latency. Targeted transcriptions are provided which are ideally suited for advanced GenAl applications in communication environments. The hybrid approach according to the invention enables a wider range of GenAl applications, ultimately boosting productivity and enhancing user experience in communication and consultation scenarios.

According to the exemplary embodiments, a method for generating accurate speech-to-text (STT) transcriptions in communication sessions is provided, wherein the method comprises the steps of: establishing, by a first user, a communication session with at least one second user; capturing, by at least one Machine Learning, (ML) model entity, audio data from the communication session; capturing, by at least one Natural Language Processing (NLP) entity, audio data from the communication session; producing, by the at least one ML model entity time-stamped transcription chunks of the audio data; producing, by the at least one NLP entity, time-stamped transcription chunks of the audio data; synchronizing and merging, by one or more chunk synchronization entity, the transcription chunks according to their time-stamps; processing, by one or more transformer model processing entity, the synchronized and merged transcription chunks; and ending the method.

According to a preferred embodiment, grammar/vocabulary of the at least one NLP entity is updated by one or more grammar/vocabulary update entity, if new grammar/vocabulary is detected. Said grammar/vocabulary may be stored in a file in the same device the transcription mechanism is running. In case said file is empty, the step of updating the grammar/vocabulary may be skipped.

According to a preferred embodiment, the processed transcription of the audio data is output by a transcription entity.

According to a preferred embodiment, the at least one ML model entity and the at least one NLP entity run on different devices.

According to another preferred embodiment, the at least one ML model entity is an automatic speech recognition, ASR, model, and the at least one NLP entity is a WebSpeech Application Programming Interface, API, -like process.

According to still another preferred embodiment, the at least one ML model entity has context-awareness and allows domain-specific errors.

Further, according to a preferred embodiment, the at least one NLP entity has an updatable domain-specific vocabulary/grammar.

According to still another preferred embodiment, multiple ML models are incorporated simultaneously.

According to yet another preferred embodiment, the step of updating the vocabulary is performed at various levels selected from user level, organization level, conversation/channel level, and/or any combination of said levels.

According to still another preferred embodiment, updating is performed in real-time.

According to another preferred embodiment, updates are added through interfaces and/or API calls.

According to yet another preferred embodiment, the transcription chunks are collected from multiple devices.

According to a preferred embodiment, a transcription entity collects and stores the transcription chunks.

Further, according to another preferred embodiment, the transcription chunks are synchronized and merged into time-frame windows of 1 to 60 seconds, 1 to 30 seconds, 1 to 15 seconds, 1 to 10 seconds, and/or 30 to 60 seconds, 45 to 60 seconds, 50 to 60 seconds; and/or all transcription chunks of a complete session are synchronized and merged.

According to still another preferred embodiment, the method further comprises the step of employing overlapping time-frame windows before the step of synchronizing and merging of the transcription chunks, wherein said step comprises: configuring, by the one or more overlapping windows entity, the level of overlapping; and capturing, by the at least one ML model entity and the at least one NLP entity, different context. In case audio data from at least two different devices with overlaps are captured, some parts may be the same, thus they are transcribed twice. In accordance, the results of said transcriptions may be compared.

According to yet another preferred embodiment, the transcription chunks are evaluated in conjunction, leveraging grammar/vocabulary from the transcription chunks produced by the at least one NLP entity, and context from the transcription chunks, produced by the at least one ML model entity.

According to another aspect of the present invention, a system for generating accurate speech-to-text transcriptions in communication sessions is provided, wherein the system is configured to perform the method for generating accurate speech-to-text transcriptions in communication sessions.

According to a preferred embodiment, the system comprises:
- at least one ML model entity;
- at least one NLP entity;
- one or more grammar/vocabulary update entity;
- one or more chunk synchronization entity;
- one or more overlapping windows entity;
- one or more transformer model processing entity; and/or
- a media server.

In the meaning of the present invention, the term "communication session" refers to conferences like Unified Communications (UC), Contact Center (CC) scenarios and E-consultation scenarios.

In the meaning of the present invention, the terms "user" and "participant" are used interchangeably throughout the present description to refer to an individual who attends a communication session.

In the meaning of the present invention, the term "latency" refers to the amount of time it takes for data to travel from one point to another across a network. A network with high latency will have slower response times, while a low-latency network will have faster response times.

In the meaning of the present invention, the term "Generative Al, GenAl" refers to a subset of artificial intelligence that uses generative models to produce text, images, videos, or other forms of data. These models often generate output in response to specific prompts. Generative Al systems learn the underlying patterns and structures of their training data, enabling them to create new data.

In the meaning of the present invention, the term "transcription chunks" refers to a segment of audio data that is transcribed into written form. Chunks are often used to break down speech into manageable pieces, such as phrases or sentences. The size of a chunk can vary based on the purpose of the transcription and the nature of the speech being analyzed.

In the meaning of the present invention, grammar and/or vocabulary may be stored in a file in the same device the transcription mechanism is running. If said file is empty, no grammar/vocabulary may be updated, and the step of updating may be skipped.

In the meaning of the present invention, the term "transcription entity" refers to the at least one ML model entity, the at least one NLP entity and/or to both entities.

In the meaning of the present invention, the term "incorporated simultaneously" in regard to the multiple ML models means that more than one ML model can perform at the same time.

In the meaning of the present invention, a "media server" is a dedicated server running applications that store and share multimedia files (text, graphics, video, audio, etc.) on demand. A media server can be any device having network access with suitable bandwidth for the sharing and saving of media. A server, Personal computer (PC), network-attached storage (NAS) or any other device with such storage capability can be used as a media server.

The present invention provides a hybrid approach that combines the strengths of machine learning-based Speech-to-Text/ASR models and traditional NLP techniques like WebSpeech API. This inventive combination addresses the key limitations of both approaches while leveraging their respective advantages.

The present invention thus offers a flexible, scalable and cost-effective approach for real-time or near-real-time transcription. High accuracy is maintained while computational costs are kept manageable by utilizing a lightweight NLP technique for easy vocabulary updates and an ML-based model for context-aware corrections, then combining their outputs using a transformer model processing entity. Thus, the inventive method allows for easy adaptation to domain-specific terminology without requiring extensive model retraining.

As the ML model and the NLP entities may not transcribe exactly in the same manner frequently and may provide distinct contexts, the use of overlapping windows for the two entities prevents duplication and captures words that may be truncated in one recording and appear in the next. Therefore, the combination of the outputs of the ML model and the NLP entities may result in a richer context, supplying the transformer model processing entity with sufficient information to make accurate corrections.

Additionally, the invention may work across various devices and platforms, including those with limited computational resources, setting it apart from current solutions that often require high-end hardware or cloud-based processing. By addressing the issues of accuracy, latency, cost, and vocabulary flexibility simultaneously, the present invention offers a comprehensive and adaptable solution for communication sessions like UC, CC, and E-Consultation solutions.

In summary, the present invention provides a method for generating accurate, real-time speech-to-text transcriptions in communication scenarios. The method combines outputs from a machine learning-based Speech-to-Text/ASR model and multiple NLP API-like processes running on different endpoints. Said outputs are synchronized using time-stamps and merged into chunks. The merged chunks are then processed by a transformer model processing entity, which leverages the context-awareness of the ML model and the easily updatable domain-specific vocabulary of the NLP technique.

Said inventive hybrid approach results in highly accurate transcriptions that incorporate domain-specific terminology, while maintaining low computational costs and latency. The flexibility of the present invention allows for easy vocabulary updates and adaptation to various industries and use cases, making it ideal for enabling GenAl solutions in Unified Communications, Contact Centers, and E-Consultation environments.

According to the present invention, instead of relying on a single speech-to-text model, the inventive system may be adapted to incorporate multiple ML models simultaneously. This may allow for the comparison and selection of the best transcription results from various models, potentially improving accuracy even further. The transformer model processing entity may be trained to weigh and combine outputs from different ML models, taking into account their individual strengths and weaknesses for specific types of speech or domains.

By adjusting the time-frame window used for chunk synchronization, the present invention enables to dynamically optimize the balance between real-time responsiveness and transcription accuracy based on the specific requirements of different use cases or changing network conditions. For instance, in scenarios where ultra-low latency is needed, the inventive system may automatically reduce the time-frame window, while in situations where accuracy takes priority, it may extend the time-frame window to gather more context before processing.

It has also to be noted that aspects of the invention have been described with reference to different subject-matters. In particular, some aspects or embodiments have been described with reference to method type claims whereas other aspects have been described with reference to system type claims. However, a person skilled in the art will gather from the above and the following description that, unless otherwise notified, in addition to any combination between features belonging to one type of subject-matter also any combination between features relating to different types of subject-matters is considered to be disclosed with this text. In particular combinations between features relating to the method type claims and features relating to the system type claims are considered to be disclosed. In addition, features relating to one of the embodiments may be combined with other features of another embodiment, the drawings or the claims, where possible. The invention and embodiments thereof will be described below in further detail in connection with the drawing(s).

### BRIEF DESCRIPTION OF THE DRAWING FIGURES

A more complete understanding of exemplary embodiments of the present disclosure can be derived by referring to the detailed description and claims when considered in connection with the following illustrative figures.
- Fig. 1: shows a flowchart of the method for generating accurate STT transcriptions in communication sessions according to an embodiment of the invention.
- Fig. 2: shows a schematic illustration of the architecture of the system according to an embodiment of the invention.

It will be appreciated that elements in the figures are illustrated for simplicity and clarity and have not necessarily been drawn to scale. For example, the dimensions of some of the elements in the figures may be exaggerated relative to other elements to help improve understanding of illustrated embodiments of the present disclosure.

### DETAILED DESCRIPTION OF EXEMPLARY EMBODIMENTS

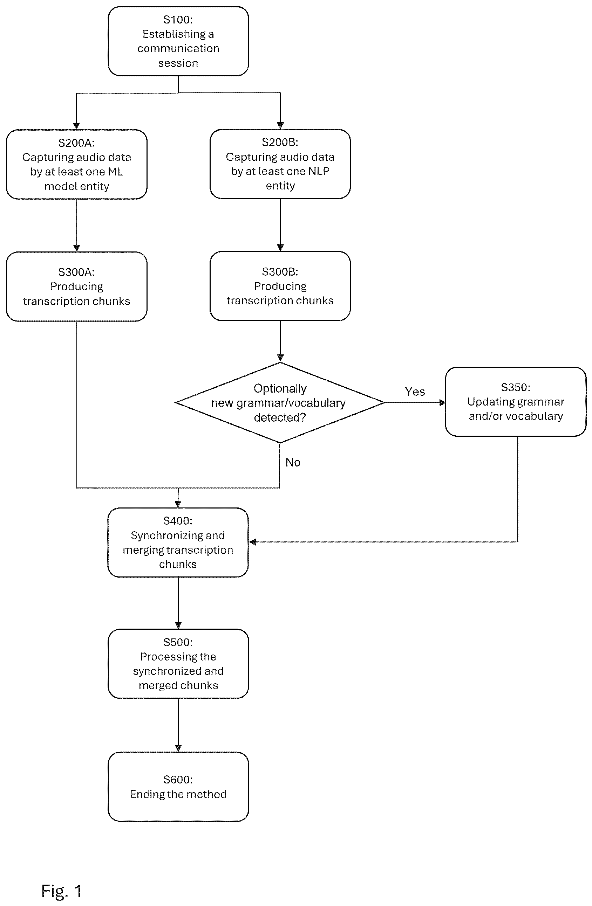

Fig. 1 shows a flowchart of the method for generating accurate STT transcriptions in communication sessions according to an embodiment of the invention.

In step S100, a communication session is established between at least two users. Said communication sessions may be Unified Communications (UC), Contact Center (CC) and/or E-Consultations scenarios. In step S200A, at least one ML model entity may capture audio data by having access to the audio channels of all participants of the communication session. A ML model like Whisper, Vosk, DeepSpeech, Riva and/or SpeechT5 may be used. Some of the models may allow the addition of vocabulary. The ML model(s) may be treated as a black box due to the complexity or impossibility of altering its vocabulary/grammar. According to the invention, audio data may also be captured by at least one NLP entity like a WebSpeech API-like transcription process on an application, a webApp or OS level (step S200B). The at least one NLP entity may run on all capable devices, even devices running a ML model may run a NLP entity if capable. The NLP entity is not compute-intensive and may run on devices unable to handle even smaller ML model entities. It may only capture audio data from the local device's microphone, differing from the all-participant audio channel capturing of the ML model entity. In steps S300A and S300B, the at least one ML model entity and the at least one NLP entity may produce transcription chunks from the audio data captured in steps S200A and S200B, respectively. The transcription chunks produced by both types of entities are time-stamped. This is advantageous as it makes the synchronization of the different transcription chunks easier. In case of the ML model entity, the model may have context awareness, inferring incorrect wording based on previously transcribed chunks. However, even having context-awareness, the ML model entity may not correct some parts, especially domain-specific vocabulary like medicine, law, engineering, product names, acronyms, etc. In contrast to the ML model entity, the NLP entity may not have context-awareness. Each device may have its own vocabulary/grammar, which may be provided tenant-, organization- and/or conversation-wide. Further, it may be enriched with the device's own grammar which it may collect over time. Said enriching may be done using a list, a dictionary or any other structured format. Optionally, if new grammar/vocabulary is detected, updating of the grammar/vocabulary according to the present invention may be made at multiple levels in step S350; at the level of the various users, the organization, the conversation or channel and/or any combination of said levels. Updates may be performed in real-time without interrupting ongoing processes, and new vocabulary may be added through a simple interface or API call. The inventive system may automatically learn and incorporate new terms based on frequency of use or manual approval. The updated grammar/vocabulary may be available for use in the **NLP** entity immediately. Thus, flexibility according to the present invention allows for rapid adaptation to new domains, topics and/or specialized terminology.

In step S400, the transcription chunks from both entities, namely the ML model and the NLP technique, may be collected from multiple devices. Said transcription chunks may be synchronized by using the time-stamps from both processes. The transcription chunks may be joined in time-frames of 1 to 60 seconds, 1 to 30 seconds, 1 to 15 seconds, 1 to 10 seconds, and/or 30 to 60 seconds, 45 to 60 seconds, 50 to 60 seconds, wherein smaller time-frames refer to real-time scenarios, and larger time-frames refer to near real-time scenarios. Optionally, all transcription chunks of a complete transcription may be joined for a non-time-sensitive operation. According to the present invention, overlapping windows may be employed before the step of synchronizing and merging of the transcription chunks to ensure that different sections of the audio data are transcribed, preventing duplication and ensuring that words cut off in one recording may still be captured in the subsequent recording. The level of overlapping may be configurable. Each of the entities may capture distinct context, enriching the combined output. In this context, if the audio data of two or more different devices with overlaps are captured, some parts of the audio data may be the same, thus they may be transcribed twice. Said overlapping transcriptions may be compared. In step S500, each set of joined transcription chunks may be input into a transformer model processing entity. Said inputting may be done on a first-come, first-serve basis. The transformer model may follow the following instructions:
Transcription chunks from the ML model entity may have more contextually correct transcriptions but may have domain-specific vocabulary errors. Transcription chunks from the NLP entity may have more general errors but fewer domain-specific vocabulary errors. Transcription chunks may be evaluated in conjunction, considering the time-stamps and sources. The processing entity may leverage the vocabulary/grammar from the NLP entity and the context from the ML model entity. The processed transcription may be output by the transcription entity.

In the last step, S600, the method ends.

The present invention may assist in creating accurate, real-time transcriptions of court hearings, depositions, or client meetings, incorporating legal terminology. Healthcare professionals may use the present invention for more accurate and efficient patient notetaking, leveraging its ability to handle complex medical vocabulary. By incorporating language-specific models and vocabularies, the present invention may facilitate real-time transcription and potentially translation in international business settings.

In addition, the present invention may be enhanced with an adaptive mechanism for adjusting the time-frame window used for chunk synchronization. This would allow the system to dynamically optimize the balance between real-time responsiveness and transcription accuracy based on the specific requirements of different use cases or changing network conditions. For instance, in scenarios where ultra-low latency is needed, the system could automatically reduce the time-frame window, while in situations where accuracy takes priority, it could extend the window to gather more context before processing.

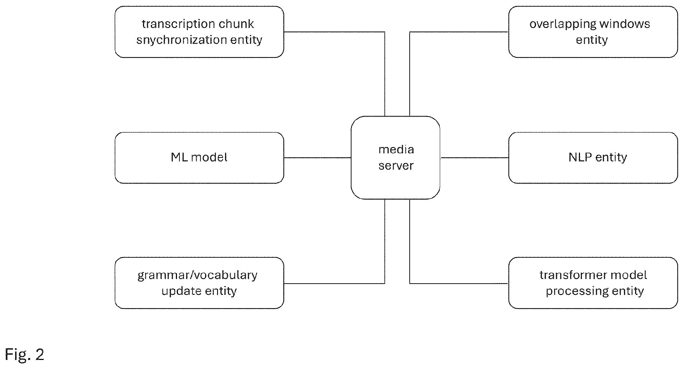

Fig. 2 schematically shows the architecture of the system according to an embodiment of the present invention. As can be gathered from Fig. 2 and also from the figure description of Fig. 1, there are multiple entities in the inventive system which are configured to perform the inventive method. The system of the present invention may comprise at least one ML model entity, at least one NLP entity, one or more vocabulary/grammar update entity, one or more transcription chunk synchronization entity, one or more overlapping windows entity, one or more transformer model processing entity, and a media server.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

| | | |
|---|---|---|
| 1 | S100 - S700 | steps of the inventive method |
| 2 | ML | Machine Learning |
| 3 | NLP | Natural Language Processing |
| 4 | API | Application Programming Interface |
| 5 | UC | Unified Communication |
| 6 | CC | Contact Center |
| 7 | ASR | automatic speech recognition |
| 8 | GenAl | Generative Artificial Intelligence |
| 9 | STT | speech-to-text |

## Claims

1. A method for generating accurate speech-to-text, STT, transcriptions in communication sessions, wherein the method comprises the steps of:
- establishing (S100), by a first user, a communication session with at least one second user;
- capturing (S200A), by at least one Machine Learning, ML, model entity, audio data from a communication session;
- capturing (S200B), by at least one Natural Language Processing, NLP, entity, audio data from a communication session;
- producing (S300A), by the at least one ML model entity time-stamped transcription chunks of the audio data;
- producing (S300B), by the at least one NLP entity, time-stamped transcription chunks of the audio data;
- synchronizing and merging (S400), by one or more chunk synchronization entity, the transcription chunks according to their time-stamps;
- processing (S500), by one or more transformer model processing entity, the synchronized and merged transcription chunks;
- ending (S600) the method.

2. The method according to claim 1, wherein the at least one ML model entity and the at least one NLP entity run on different endpoints.

3. The method according to claim 1 or claim 2, wherein the at least one ML model entity is an automatic speech recognition, ASR, model, and the at least one NLP entity is a WebSpeech Application Programming Interface, API, -like process.

4. The method according to any preceding claim, wherein the at least one ML model entity has context-awareness and allows domain-specific errors.

5. The method according to any preceding claim, wherein the at least one NLP entity has an updatable domain-specific vocabulary/grammar.

6. The method according to any preceding claim, wherein multiple ML models are incorporated simultaneously.

7. The method according to any preceding claim, wherein the method further comprises the step of updating, by one or more grammar/vocabulary update entity, the grammar/vocabulary, in case new grammar/vocabulary is detected.

8. The method according to claim 7, wherein the step of updating the grammar/vocabulary is performed at various levels selected from user level, organization level, conversation/ channel level, and/or any combination of said levels, and/or wherein updating is performed in real-time.

9. The method according to claim 7 or claim 8, wherein updates are added through interfaces and/or API calls.

10. The method according to any preceding claim, wherein transcription chunks are collected from multiple endpoints.

11. The method according to claim 10, wherein the transcription chunks are synchronized and merged into time-frame windows of 1 to 60 seconds, 1 to 30 seconds, 1 to 15 seconds, 1 to 10 seconds, and/or 30 to 60 seconds, 45 to 60 seconds, 50 to 60 seconds; and/or all transcriptions chunks of a complete transcription are synchronized and merged.

12. The method according to any preceding claim, wherein the method further comprises the step of employing overlapping time-frame windows before step S400, wherein said employing step comprises:
- configuring, by the one or more overlapping windows entity, the level of overlapping; and
- capturing, by the at least one ML model entity and the at least one NLP entity, different context.

13. The method according to any preceding claim, wherein the transcription chunks are evaluated in conjunction in step S500, leveraging grammar/vocabulary from the transcription chunks produced by the at least one NLP entity, and context from the transcription chunks, produced by the at least one ML model entity.

14. A system for generating accurate speech-to-text transcription in communication sessions, wherein the system is configured to perform the method according to any of claims 1 to 13.

15. The system according to claim 14 wherein the system comprises:
- at least one ML model entity;
- at least one NLP entity;
- one or more grammar/vocabulary update entity;
- one or more chunk synchronization entity;
- one or more overlapping windows entity;
- one or more transformer model processing entity; and/or
- a media server.
